(19) Europäisches Patentamt / European Patent Office / Office européen des brevets

(11) EP 2 725 522 A1

(12) DEMANDE DE BREVET EUROPEEN

(43) Date de publication:
30.04.2014 Bulletin 2014/18

(51) Int Cl.:
G06K 9/00 (2006.01)   G06K 9/46 (2006.01)

(21) Numéro de dépôt: 13189823.1

(22) Date de dépôt: 23.10.2013

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR
Etats d'extension désignés:
BA ME

(30) Priorité: 25.10.2012 FR 1260165

(71) Demandeur: SAGEMCOM DOCUMENTS SAS
92500 Rueil Malmaison (FR)

(72) Inventeurs:
• Berger, Jérôme
92500 RUEIL MALMAISON (FR)
• Petit, Frédéric
92500 RUEIL MALMAISON (FR)
• Carre, Philippe
92500 RUEIL MALMAISON (FR)

(74) Mandataire: Maillet, Alain
Cabinet Le Guen Maillet
5, place Newquay
B.P. 70250
35802 Dinard Cedex (FR)

(54) **Procédé de segmentation d'un document numérique**

(57) L'invention concerne un procédé de segmentation d'un document numérique constitué de pixels. Le procédé :
- décompose (E201) en ondelettes des pixels pour obtenir des coefficients de trois images de détail,
- partitionne (E202) la décomposition en ondelettes en blocs de coefficients,
- détermine (E203) une variance pour chaque bloc,
- identifie (E205) des blocs qui comprennent du texte à partir des variances déterminées,
- pour chaque bloc identifié, identifie des pixels du document correspondant au bloc identifié et détermine un histogramme de valeurs,
- pour chaque histogramme, retranche aux valeurs de l'histogramme, des valeurs de deux gaussiennes déterminées à partir d'une partie des valeurs de l'histogramme,
- pour chaque histogramme, détermine si la zone comportant des pixels correspondant au bloc identifié est une zone de texte en comparant une donnée obtenue à partir de l'histogramme à un premier seuil.

Fig. 2a

E200 Redimensionnement document
E201 Décomposition en ondelettes
E202 Partitionnement en blocs
E203 Calcul variances pour chaque bloc
E204 Classification
E205 Identification blocs texte
E206 Mémorisation blocs texte
E207 Division blocs non texte
E208 Calcul variances pour chaque sous bloc
E209 Classification
E210 Identification sous blocs texte

EP 2 725 522 A1

**Description**

La présente invention concerne un procédé et un dispositif de segmentation d'un document numérique constitué de pixels.

La segmentation d'un document numérique permet d'identifier les différents types de contenus que le document comporte.

L'identification de zones dans un document numérique comprenant du texte, des images ou des graphiques permet de choisir une méthode de compression optimale pour les zones de texte identifiées.

Par exemple, lorsqu'une zone de texte est identifiée dans un document, il est possible de réaliser sur cette zone un algorithme de reconnaissance de caractères qui permet de compresser avec un fort taux de compression celle-ci.

De même, si une zone comprend une image, il est possible d'utiliser un algorithme de compression adapté aux particularités des images.

Il en est de même pour les zones comprenant des graphiques.

La présente invention a pour but de résoudre les inconvénients de l'art antérieur en proposant un procédé et un dispositif de segmentation d'un document numérique constitué de pixels qui soit fiable et permette de déterminer de manière précise les zones d'un document qui comprennent du texte.

A cette fin, selon un premier aspect, l'invention propose un procédé de segmentation d'un document numérique constitué de pixels **caractérisé en ce que** le procédé comporte les étapes de :

- décomposition en ondelettes des pixels pour obtenir des coefficients de trois images de détail,
- partitionnement de la décomposition en ondelettes en blocs de coefficients selon une grille,
- détermination d'une variance pour chaque bloc de coefficients,
- identification des blocs qui comprennent du texte à partir des variances déterminées,
- pour chaque bloc identifié, identification des pixels du document correspondant au bloc identifié et détermination d'un histogramme de valeurs,
- pour chaque histogramme, retranchement aux valeurs de l'histogramme, des valeurs de deux gaussiennes déterminées à partir d'une partie des valeurs de l'histogramme,
- pour chaque histogramme, détermination si la zone comportant des pixels correspondant au bloc identifié est une zone de texte en comparant une donnée obtenue à partir de l'histogramme dont les valeurs de deux gaussiennes ont été retranchées à un premier seuil.

La présente invention concerne aussi un dispositif de segmentation d'un document numérique constitué de pixels **caractérisé en ce que** le dispositif comporte :

- des moyens de décomposition en ondelettes des pixels pour obtenir des coefficients de trois images de détail,
- des moyens de partitionnement de la décomposition en ondelettes en blocs de coefficients selon une grille,
- des moyens de détermination d'une variance pour chaque bloc de coefficients,
- des moyens d'identification des blocs qui comprennent du texte à partir des variances déterminées,
- des moyens, pour chaque bloc identifié, d'identification des pixels du document correspondant au bloc identifié et détermination d'un histogramme de valeurs,
- des moyens, pour chaque histogramme, de retranchement aux valeurs de l'histogramme, des valeurs de deux gaussiennes déterminées à partir d'une partie des valeurs de l'histogramme,
- des moyens, pour chaque histogramme, de détermination si la zone comportant des pixels correspondant au bloc identifié est une zone de texte en comparant une donnée obtenue à partir de l'histogramme dont les valeurs de deux gaussiennes ont été retranchées à un premier seuil.

Ainsi, il est possible d'identifier dans un document quelles zones contiennent du texte.

En effectuant une première identification de zones de textes à partir de variances déterminées sur des coefficients issus d'une décomposition en ondelettes des pixels du document, la présente invention identifie rapidement ces zones.

En effectuant, seulement sur les zones identifiées, des histogrammes sur les pixels correspondants à ces zones et en retranchant aux valeurs des histogrammes, des valeurs de deux gaussiennes déterminées à partir d'une partie des valeurs de l'histogramme, la détermination de zones de texte est à la fois fiable et rapide.

Selon un mode particulier de l'invention, le procédé comporte en outre les étapes de :

- division des blocs non identifiés comme comprenant du texte en sous blocs,
- détermination d'une variance pour chaque sous bloc de coefficients,
- identification des sous blocs qui comprennent du texte à partir des variances déterminées,
- pour chaque sous bloc identifié, identification des pixels du document correspondant au sous bloc identifié et détermination d'un histogramme de valeurs,
- pour chaque histogramme, retranchement aux valeurs de l'histogramme, des valeurs de deux gaussiennes déterminées à partir d'une partie des valeurs de l'histogramme,
- pour chaque histogramme, détermination si la zone comportant des pixels correspondant au sous bloc identifié est une zone de texte en comparant une donnée obtenue à partir de l'histogramme dont les valeurs de deux gaussiennes ont été retranchées à un second seuil.

Ainsi, la présente invention en détectant dans un premier temps les blocs contenant du texte et ensuite des sous blocs contenant du texte est rapide et fiable.

Selon un mode particulier de l'invention, le procédé comporte en outre les étapes de :

- sélection d'au moins un bloc adjacent à un sous bloc correspondant à une zone de texte, et si le bloc adjacent n'est pas identifié comme une zone de texte :
- identification des pixels du document correspondant au bloc adjacent et détermination d'un histogramme de valeurs,
- retranchement aux valeurs de l'histogramme, des valeurs de deux gaussiennes déterminées à partir d'une partie des valeurs de l'histogramme,
- détermination si la zone comportant des pixels correspondant au bloc adjacent est une zone de texte en comparant une donnée obtenue à partir de l'histogramme dont les valeurs de deux gaussiennes ont été retranchées à un troisième seuil.

Ainsi, la présente invention est particulièrement bien adaptée à la détection de textes, par exemple en bord de paragraphes et/ou d'encadrés.

Selon un mode particulier de l'invention, un bloc est constitué de soixante quatre par soixante quatre coefficients, un sous bloc est constitué de trente deux par trente deux coefficients et un bloc adjacent est constitué de seize par seize coefficients.

Ainsi, les tailles des blocs, des sous blocs et des blocs adjacents étant des puissances de deux, l'exécution de la présente invention est rapide.

Selon un mode particulier de l'invention, les blocs qui comprennent du texte sont identifiés en effectuant une classification des variances déterminées en deux partitions.

Ainsi, l'exécution de la présente invention est rapide.

Selon un mode particulier de l'invention, la variance est une somme de variances calculées sur des coefficients de trois images de détails situés à la même position dans la grille.

Selon un mode particulier de l'invention, le procédé comporte en outre les étapes effectuées sur des zones du document non déterminées comme zones de texte de:

- calcul de la valeur médiane de chaque coefficient de chaque image de détail et qui ne correspond pas à un bloc ou sous bloc ou bloc adjacent contenant du texte.
- formation d'autant de vecteurs à trois dimensions qu'il existe de positions de coefficients dans une image de détail ne correspondant pas à un bloc ou sous bloc ou bloc adjacent contenant du texte, les coordonnées de chaque vecteur étant les valeurs des médianes du coefficient calculées dans les trois images de détail,

- classification des vecteurs en quatre classes,
- fusion des trois classes ayant la plus forte énergie.
- ouverture et dilatation, pour chaque position correspondant à un vecteur compris dans les trois classes fusionnées,
- détermination de marqueurs représentatifs de la présence d'une zone d'image dans le document comme les pixels résultant de l'ouverture et de la dilatation morphologique.

Selon un mode particulier de l'invention, le procédé comporte en outre les étapes de :

- affectation d'une valeur binaire à chaque coefficient de chaque image de détail et qui ne correspond pas à un bloc ou sous bloc ou bloc adjacent contenant du texte,
- fusion des trois images de détail dont les coefficients ont une valeur binaire,
- exécution d'un algorithme de lissage de longueur sur les coefficients fusionnés,
- ouverture morphologique asymétrique sur les coefficients sur lesquels l'algorithme de lissage a été effectué,
- recherche de composantes connexes avec les coefficients obtenus suite à l'ouverture morphologique asymétrique
- détermination pour chaque composante connexe, d'une boîte englobant la composante connexe.

Selon un mode particulier de l'invention, le procédé comporte en outre les étapes de :

- association aux boîtes englobantes des marqueurs représentatifs de la présence d'une zone d'image dans le document,
- détermination, pour chaque boîte englobante, du taux de présence de marqueurs dans ladite boîte englobante et sélection des boîtes englobantes dont le taux de présence est supérieur à un seuil prédéterminé,
- détermination que chaque boîte englobante dont le taux de présence de marqueurs dans la boîte englobante est supérieur au seuil prédéterminé est une boite englobante contenant au moins une image.

Ainsi, il est possible de déterminer quelles zones du document comprennent des images et de pouvoir choisir un type de compression adapté aux images.

Selon un mode particulier de l'invention, le procédé comporte en outre l'étape de:

- suppression de toutes les boîtes englobantes contenant au moins une image qui ont une taille inférieure à une valeur prédéterminée.

Selon un mode particulier de l'invention, le procédé comporte en outre les étapes de :

- sélection parmi les images de détail fusionnées des coefficients qui ne correspondent ni à une zone de texte ni à une boîte englobante contenant au moins une image qui n'a pas été supprimée,
- exécution d'un algorithme de lissage de longueur sur les coefficients sélectionnés,
- recherche de composantes connexes avec les coefficients obtenus par l'algorithme de lissage de longueur,
- détermination pour chaque composante connexe, d'une boîte englobant la composante connexe et comprenant des graphiques.

Ainsi, il est possible de déterminer quelles zones du document comprennent des graphiques et de pouvoir choisir un type de compression adapté aux graphiques.

L'invention concerne aussi les programmes d'ordinateur stockés sur un support d'informations, lesdits programmes comportant des instructions permettant de mettre en oeuvre les procédés précédemment décrits, lorsqu'ils sont chargés et exécutés par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

la Fig. 1 représente un exemple de réalisation d'un dispositif de détermination d'au moins une zone comprenant du texte dans un document constitué de pixels;

les Figs. 2a à 2c représentent un algorithme de détermination d'au moins une zone comprenant du texte d'un document constitué de pixels ;

la Fig. 3 représente un algorithme de détermination de marqueurs représentatifs de la présence d'une zone d'image dans le document ;

la Fig. 4 représente un algorithme d'extraction du contenu graphique et image par des boîtes englobantes ;

la Fig. 5 représente un algorithme de détermination de zones comprenant au moins une image et/ou de zones comprenant au moins un graphique ;

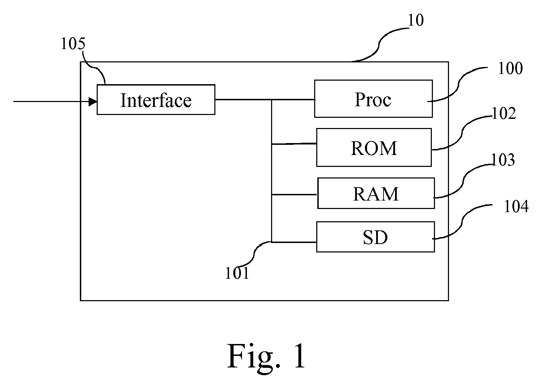

La **Fig. 1** représente un exemple de réalisation d'un dispositif de détermination d'au moins une zone comprenant du texte dans un document constitué de pixels.

Le dispositif de détermination d'au moins une zone comprenant du texte 10 comprend :

- un processeur, micro-processeur, ou microcontrôleur 100 ;
- une mémoire volatile 103 ;
- une mémoire non volatile 102;
- éventuellement, un lecteur 104 de medium de stockage, tel qu'un lecteur de carte SD (*Secure Digital Card* en anglais ou *Carte Numérique Sécurisée* en français) ou un disque dur pour mémoriser les documents traités par la présente invention ;
- une interface 105 avec un réseau de communication, comme par exemple un réseau de radiotéléphonie cellulaire ou Internet par laquelle des documents à traiter selon la présente invention sont reçus.
- un bus de communication reliant le processeur 100 à la mémoire ROM 103, à la mémoire RAM 103, au lecteur de médium de stockage 104 et à l'interface 105.

En variante, le dispositif de détermination d'au moins une zone comprenant du texte est compris dans un dispositif de numérisation de documents tel qu'un scanner ou un photocopieur.

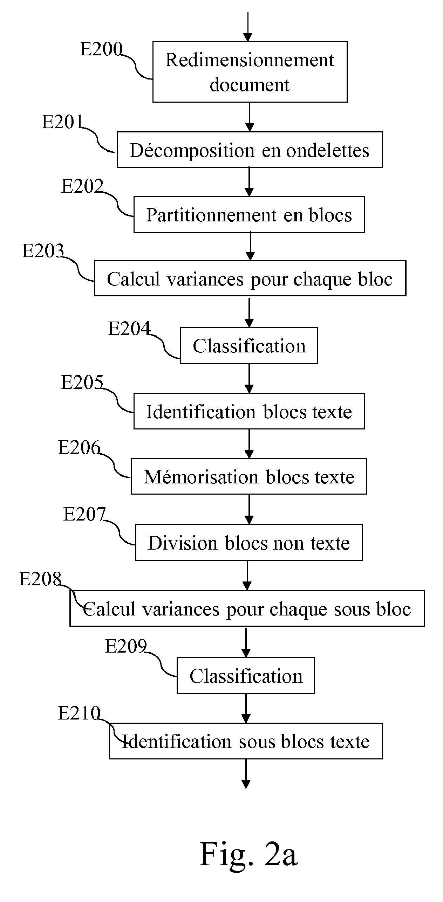

Le processeur 100 est capable d'exécuter des instructions chargées dans la mémoire volatile 103 à partir de la mémoire non volatile 102, d'une mémoire externe (non représentée), d'un support de stockage, tel qu'une carte SD ou autre, ou d'un réseau de communication. Lorsque le dispositif 10 est mis sous tension, le processeur 100 est capable de lire de la mémoire volatile 103 des instructions et de les exécuter. Ces instructions forment un programme d'ordinateur qui cause la mise en oeuvre, par le processeur 100, de tout ou partie des procédés décrits en relation avec les Figs. 2a à 2c,3, 4 et 5.

Tout ou partie des procédés décrits en relation avec les Figs. 2a à 2c, 3, 4 et 5 peut être implémenté sous forme logicielle par exécution d'un ensemble d'instructions par une machine programmable, tel qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

Les **Figs. 2a à 2c** représentent un algorithme de détermination d'au moins une zone comprenant du texte d'un document constitué de pixels.

Plus précisément, le présent algorithme est exécuté par le processeur 100 du dispositif 10.

A l'étape E200, le processeur 100 redimensionne le document à traiter. Par exemple le document à traiter est redimensionné à une taille de 1024 par 1024 pixels qui garantit une résolution suffisante pour une exécution rapide et fournissant un résultat de qualité de la présente invention.

A l'étape suivante E201, le processeur 100 exécute une décomposition du document redimensionné par transformation en ondelette discrète (en anglais Discrete Wavelet Transform). L'utilisation de cette transformation consiste à décomposer le document en quatre sous bandes de résolution inférieure. Les coefficients d'ondelettes dans les sous bandes mettent en évidence des informations sur les contours, les textures, leur localisation et leur orientation. Les sous bandes sont une image d'approximation qui a une résolution divisée par deux et trois images de détail HH, HL, LH qui donnent les hautes fréquences du document d'origine.

L'image de détail HH est obtenue à partir du traitement du document par décimation et par deux filtres passe-haut (H), l'image de détail HL est obtenue à partir du traitement du document par décimation et par un filtre passe-haut (H) et un filtre passe-bas (L) et l'image de détail LH est obtenue à partir du traitement du document par décimation et par un filtre passe-bas (L) et un filtre passe-haut (H).

Par exemple, la transformation en ondelettes discrète est une transformation de Haar.

A l'étape suivante E202, le processeur 100 partitionne chaque image de détail en un grille de blocs non superposés par exemple de taille 64 par 64 coefficients.

A l'étape suivante E203, le processeur 100 calcule, pour chaque bloc, la variance des coefficients dans le bloc et somme les variances calculées des blocs des trois images de détails situés à la même position dans la grille.

A l'étape suivante E204, le processeur 100 classifie les variances selon par exemple un algorithme de k-moyenne. Un algorithme de k-moyenne (K-means en anglais) est un apprentissage non supervisé. C'est un algorithme de partitionnement de données, c'est-à-dire une méthode dont le but est de diviser les sommations de variances en K partitions, dans lesquelles chaque somme de variances appartient à la partition avec la moyenne la plus proche.

Selon la présente invention, K est égal à deux. Une première classe pour les variances fortes, une seconde classe pour les variances faibles.

A l'étape suivante E205, le processeur 100 identifie les blocs contenant du texte comme les blocs dont la sommation de variance appartient à la classe de variance forte. Les autres blocs étant considérés comme des blocs ne contenant pas du texte.

A l'étape suivante E206, le processeur 100 mémorise la position dans la grille de chaque bloc texte identifié.

A l'étape suivante E207, le processeur partitionne chaque bloc considéré comme un bloc ne contenant pas de texte en une sous grille de sous blocs non superposés par exemple de taille 32 par 32 coefficients.

A l'étape suivante E208, le processeur 100 calcule, pour chaque sous bloc, la variance des coefficients dans le sous bloc et somme les variances calculées des sous blocs des trois images de détails situés à la même position dans la grille et la sous grille.

A l'étape suivante E209, le processeur 100 classifie les variances selon par exemple l'algorithme de k-moyenne tel que décrit à l'étape E204.

Selon la présente invention, K est égal à deux. Une première classe pour les variances fortes, une seconde classe pour les variances faibles.

A l'étape suivante E210, le processeur 100 identifie les sous blocs contenant du texte comme les sous blocs dont la sommation de variance appartient à la classe de variance forte, les autres blocs étant considérés comme des blocs ne contenant pas du texte, et mémorise la position dans la grille et la sous grille de chaque sous bloc texte identifié.

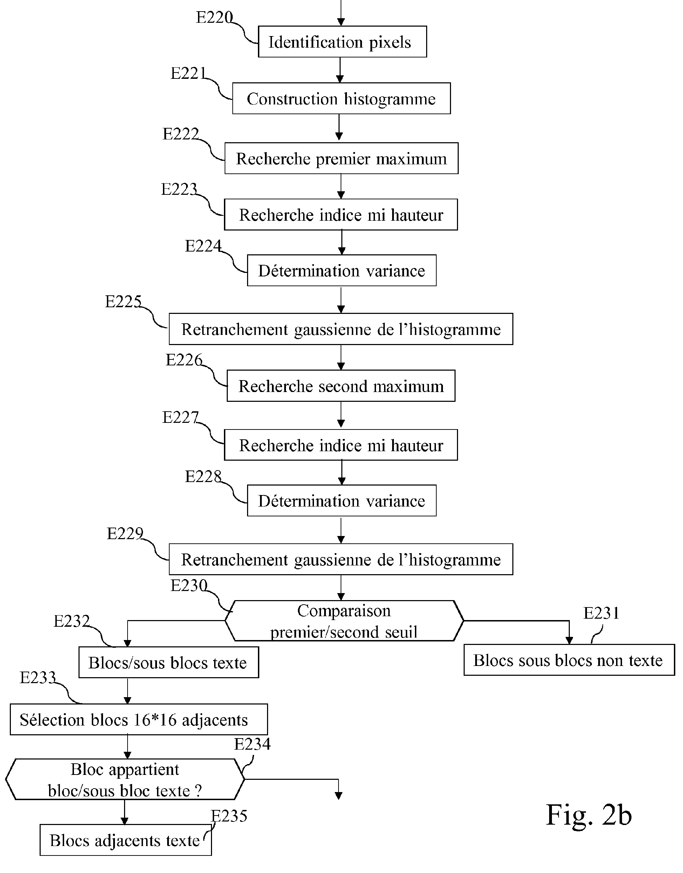

Cette étape effectuée, le processeur 100 passe à l'étape E220 de l'algorithme de la Fig. 2b.

La Fig. 2b permet de vérifier si un bloc ou un sous bloc identifié comme contenant du texte contient effectivement du texte ou contient des textures d'une image. Un bloc contenant du texte a la particularité d'être composé de deux pics, plus particulièrement deux courbes gaussiennes. Une des courbes gaussiennes est représentative de la couleur ou la nuance du texte tandis que l'autre est représentative de la couleur ou la nuance du fond sur lequel est reproduit le texte. Un bloc contenant des textures n'est pas constitué de deux pics ou deux courbes gaussiennes.

A l'étape E220, le processeur 100 identifie, pour chaque bloc ou sous bloc identifié comme contenant du texte, un bloc ou un sous bloc de pixels correspondant dans le document.

A l'étape suivante E221, le processeur 100 construit, pour chaque bloc ou sous bloc de pixels, un histogramme de niveau de gris.

Par exemple, un histogramme a 64 classes différentes, chacune étant associée à quatre niveaux de gris consécutifs parmi 256 niveaux de gris.

A l'étape suivante E222, le processeur 100 cherche, pour chaque histogramme, un premier maximum m et mémorise l'indice de la classe à laquelle il appartient.

A l'étape suivante E223, le processeur détermine, pour chaque histogramme, l'indice des deux classes de l'histogramme dont la valeur est égale ou proche de la moitié du premier maximum.

A l'étape suivante E224, le processor 100 détermine, pour chaque histogramme, une variance à partir de l'indice de la classe du premier maximum et de chaque indice des deux classes de l'histogramme dont la valeur est égale ou proche de la moitié du premier maximum selon la formule suivante :

$$\sigma^2 = \left(\frac{m-i}{1,178}\right)^2$$

où i représente l'indice des classes de l'histogramme dont la valeur est égale ou proche de la moitié du premier maximum.

Le processeur 100 détermine la variance de la première gaussienne comme la moyenne des deux variances déterminées.

Pour chaque histogramme, à partir de la variance déterminée et du premier maximum, le processeur 100 reconstruit la première gaussienne.

A l'étape suivante E225, le processeur 100, pour chaque histogramme, retranche à chaque classe de l'histogramme de niveau de gris, la valeur correspondante de la classe de la gaussienne déterminée.

A l'étape suivante E225, le processeur 100 cherche, pour chaque histogramme résultant de l'étape E225, un second maximum m'et mémorise l'indice de la classe à laquelle il appartient. Selon un mode particulier de la présente invention, les classes proches de la classe du premier maximum ne sont pas prises en compte. Par exemple, la recherche du second maximum n'est effectuée que dans les classes dont l'indice est supérieur à l'indice de la classe du premier maximum plus huit ou la recherche du second maximum n'est effectuée que dans les classes dont l'indice est inférieur à l'indice de la classe du premier maximum moins huit.

A l'étape suivante E226, le processeur 100 détermine, pour chaque histogramme résultant de l'étape E225, l'indice des deux classes de l'histogramme dont la valeur est égale ou proche de la moitié du second maximum.

A l'étape suivante E227, le processor 100 détermine, pour chaque histogramme résultant de l'étape E225, une variance à partir de l'indice de la classe du second maximum et de chaque indice des deux classes de l'histogramme dont la valeur est égale ou proche de la moitié du second maximum selon la formule suivante :

$$\sigma'^2 = \left(\frac{m' - i'}{1,178}\right)^2$$

où i' est l'indice de chaque classe de l'histogramme dont la valeur est égale ou proche de la moitié du premier maximum.

Le processeur 100 détermine la variance de la seconde gaussienne comme la moyenne des deux variances déterminées.

Pour chaque histogramme, à partir de la variance déterminée et du second maximum, le processeur 100 reconstruit la seconde gaussienne.

A l'étape suivante E229, le processeur 100, pour chaque histogramme résultant de l'étape E225, retranche à chaque classe de l'histogramme, la valeur correspondante de la classe de la gaussienne déterminée.

A l'étape suivante E230, le processeur 100 détermine, pour chaque histogramme résultant de l'étape E229, la valeur moyenne des classes de l'histogramme et la compare à un seuil prédéterminé.

Selon un mode particulier de la présente invention, la valeur du seuil prédéterminé est à une première valeur si l'histogramme est un histogramme d'un bloc et est à une seconde valeur si l'histogramme est un histogramme d'un sous bloc.

Par exemple la première valeur est égale à 0.1 et la seconde valeur est égale à 0.05.

Si la valeur moyenne des classes de l'histogramme est supérieure au seuil prédéterminé, le processeur 100 passe à l'étape E231 et considère que le bloc ou le sous bloc correspondant à l'histogramme ne contient pas de texte.

Si la valeur moyenne des classes de l'histogramme est inférieure ou égale au seuil prédéterminé, le processeur 100 passe à l'étape E232 et considère que le bloc ou le sous bloc correspondant à l'histogramme contient du texte.

A l'étape E233, le processeur 100, pour chaque sous bloc considéré comme contenant du texte à l'étape E232, sélectionne les blocs de pixels adjacents du sous bloc.

Les blocs de pixels adjacents ont, par exemple une taille de 16 par 16 pixels.

A l'étape suivante E234, le processeur 100, pour chaque bloc adjacent, vérifie si le bloc adjacent appartient à un bloc ou sous bloc considéré comme bloc ou sous bloc de texte à l'étape E232.

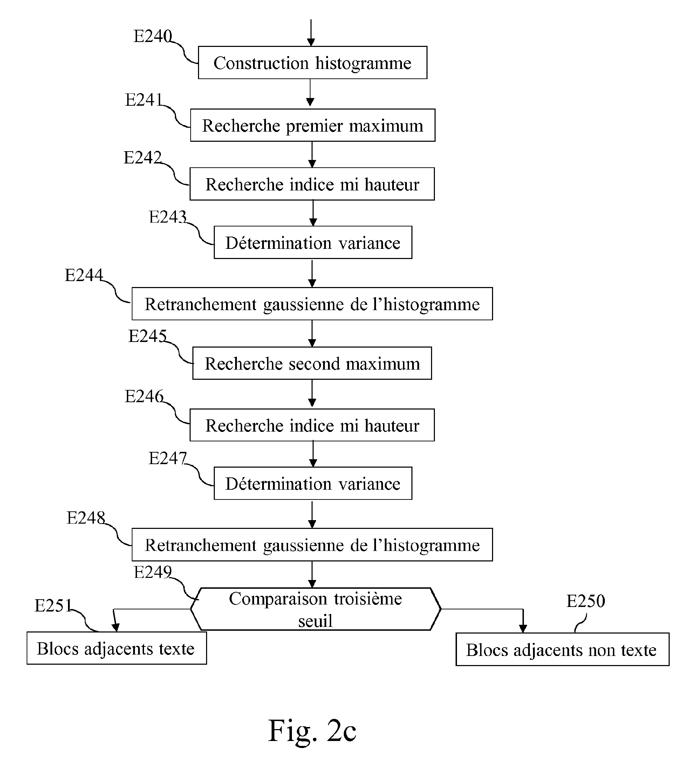

Si le bloc adjacent appartient à un bloc ou sous bloc considéré comme bloc ou sous bloc de texte à l'étape E232, le processeur 100 passe à l'étape E235. Si le bloc adjacent n'appartient pas à un bloc ou sous bloc considéré comme bloc ou sous bloc de texte à l'étape E232, le processeur 100 passe à l'étape E240 de la Fig. 2c.

La Fig. 2c permet de détecter les bords de paragraphes et/ou encadrés. En effet, une partie des caractères aux frontières des blocs et sous blocs ne sont pas identifiés comme du texte lors de l'exécution des algorithmes représentés dans les Figs. 2a et 2b. Un caractère peut être en léger chevauchement avec une partie d'image ou, dans le cas d'encadrés colorés, un bloc ou sous bloc peut être en chevauchement avec du texte sur un fond par exemple blanc et sur un fond coloré.

A l'étape E240, le processeur 100 construit, pour chaque bloc adjacent n'appartenant pas à un bloc ou sous bloc considéré comme bloc de texte à l'étape E232, un histogramme de niveau de gris.

Par exemple, un histogramme a 64 classes différentes, chacune étant associée à quatre niveaux de gris consécutifs parmi 256 niveaux de gris.

A l'étape suivante E241, le processeur 100 cherche, pour chaque histogramme, un premier maximum et mémorise l'indice de la classe.

A l'étape suivante E242, le processeur 100 détermine, pour chaque histogramme, l'indice des deux classes de l'histogramme dont la valeur est égale ou proche de la moitié du premier maximum.

A l'étape suivante E243, le processor 100 détermine, pour chaque histogramme, une variance et reconstruit la première gaussienne de la même manière que celle décrite à l'étape E223.

A l'étape suivante E244, le processeur 100, pour chaque histogramme, retranche à chaque classe de l'histogramme de niveau de gris, la valeur correspondante de la classe de la gaussienne déterminée.

A l'étape suivante E245, le processeur 100 cherche, pour chaque histogramme résultant de l'étape E244, un second maximum de la même manière que celle décrite à l'étape E225.

A l'étape suivante E246, le processeur 100 détermine, pour chaque histogramme résultant de l'étape E244, l'indice des deux classes de l'histogramme dont la valeur est égale ou proche de la moitié du second maximum.

A l'étape suivante E247, le processor 100 détermine, pour chaque histogramme résultant de l'étape E244, une variance et reconstruit la seconde gaussienne de la même manière que celle décrite à l'étape E228.

A l'étape suivante E248, le processeur 100, pour chaque histogramme résultant de l'étape E244, retranche à chaque classe de l'histogramme, la valeur correspondante de la classe de la gaussienne déterminée.

A l'étape suivante E230, le processeur 100 détermine, pour chaque histogramme résultant de l'étape E248, la valeur moyenne des classes de l'histogramme et la compare à un troisième seuil prédéterminé.

Selon un mode particulier de la présente invention, la valeur du troisième seuil prédéterminé est 0,15.

Si la valeur moyenne des classes de l'histogramme est supérieure au troisième seuil prédéterminé, le processeur 100 passe à l'étape E250 et considère que le bloc adjacent correspondant à l'histogramme ne contient pas de texte.

Si la valeur moyenne des classes de l'histogramme est inférieure ou égale au troisième seuil prédéterminé, le processeur 100 passe à l'étape E251 et considère que le bloc adjacent correspondant à l'histogramme contient du texte.

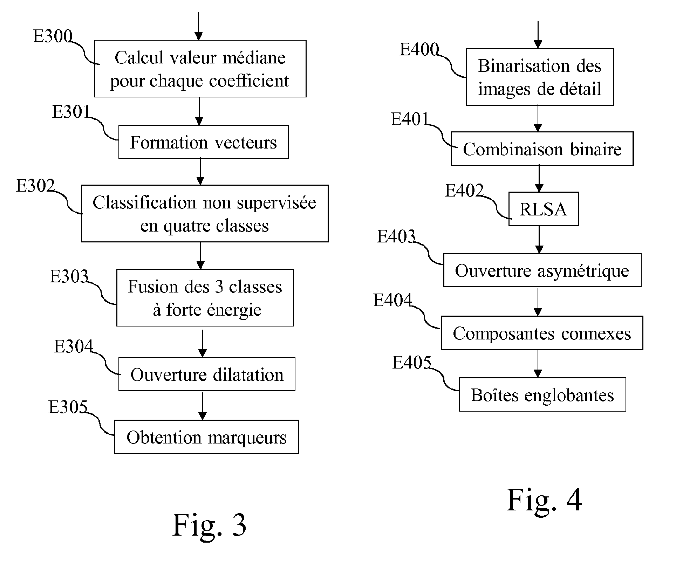

La **Fig. 3** représente un algorithme de détermination de marqueurs représentatifs de la présence d'une zone d'image dans le document.

A l'étape E300, le processeur 100 calcule la valeur médiane de chaque coefficient de chaque image de détail obtenue à l'étape E201 de l'algorithme de la Fig. 2a et qui ne correspond pas à un bloc ou sous bloc ou bloc adjacent contenant du texte.

La valeur médiane est par exemple calculée à partir des 7 par 7 valeurs d'énergie des coefficients voisins du coefficient.

A l'étape suivante E301, le processeur 100 forme autant de vecteurs à trois dimensions qu'il existe de positions de coefficients dans une image de détail ne correspondant pas à un bloc ou sous bloc ou bloc adjacent contenant du texte.

Les coordonnées de chaque vecteur sont les valeurs des médianes du coefficient calculées dans les trois images de détail.

A l'étape suivante E302, le processeur 100 classifie les vecteurs selon par exemple un algorithme de partitionnement non supervisé, par exemple l'algorithme de k-moyenne.

Selon la présente invention, le nombre de classes k est égal à quatre.

A l'étape suivante E303, le processeur 100 fusionne trois classes ayant la plus forte énergie.

A l'étape suivante E304, le processeur 100 effectue, pour chaque position correspondant à un vecteur compris dans les trois classes fusionnées une opération d'ouverture avec un élément structurant carré de taille 10 pixels de manière à supprimer les contours liés aux graphiques et une opération de dilatation avec un élément structurant carré de taille 20 pixels de manière à rattacher les morceaux disjoints d'une même image.

A l'étape suivante, le processeur 100 détermine les marqueurs représentatifs de la présence d'une zone d'image dans le document comme les pixels restant de l'étape d'ouverture et de dilatation morphologique.

La **Fig. 4** représente un algorithme d'extraction du contenu graphique et image par boîtes englobantes.

A l'étape E400, le processeur 100 binarise la valeur de chaque coefficient de chaque image de détail obtenue à l'étape E201 de l'algorithme de la Fig. 2a et qui ne correspond pas à un bloc ou sous bloc ou bloc adjacent contenant du texte. Pour cela le processeur 100 affecte, à chaque coefficient dont la valeur de niveau de gris est inférieure à 5% de la valeur maximale qu'un niveau de gris peut prendre, la valeur nulle et affecte à chaque coefficient dont la valeur de niveau de gris est supérieure ou égale à 5% de la valeur maximale qu'un niveau de gris peut prendre, la valeur binaire un.

A l'étape suivante E401, le processeur 100 fusionne les trois images de détail binarisées en effectuant une combinaison logique de celle-ci.

Un coefficient de fusion a la valeur binaire 1 s'il est à la valeur 1 dans l'image de détail LH et l'image de détail HH ou coefficient de fusion a la valeur binaire 1 s'il est à la valeur 1 dans l'image de détail HL et l'image de détail HH. Les coefficients ne remplissant pas ces conditions sont mis à la valeur nulle.

A l'étape suivante E402, le processeur 100 exécute un algorithme de lissage de longueur (en anglais *Run Length Smoothing Algorithm* RLSA) sur les coefficients de fusion.

Un algorithme RLSA met à 1 un coefficient dont la valeur était nulle si le nombre de coefficients adjacents dont la valeur est nulle est inférieur ou égal à une valeur prédéterminée C.

Selon la présente invention, C est égal à 20.

A l'étape suivante E403, le processeur 100 effectue sur les valeurs des coefficients obtenus à l'étape précédente une ouverture morphologique asymétrique qui consiste en une érosion de 5 coefficients et une dilatation de 20 coefficients.

A l'étape suivante E404, le processeur 100 procède à une recherche de composantes connexes avec les coefficients obtenus à l'étape E403.

Une composante connexe regroupe tous les coefficients de valeur 1 qui sont adjacents à un pixel de valeur 1. En d'autres termes, il existe au moins un chemin entre chaque paire de coefficients d'une composante connexe.

A l'étape suivante E405, le processeur 100 détermine pour chaque composante connexe, un rectangle ou boîte englobant la composante connexe.

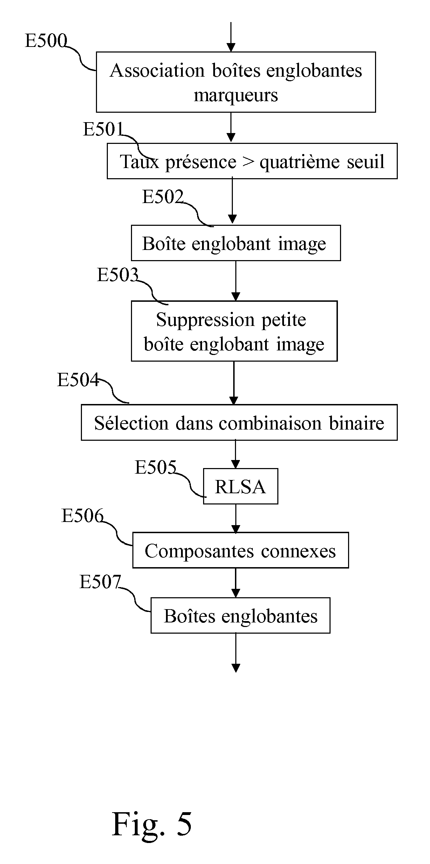

La **Fig. 5** représente un algorithme de détermination de zones comprenant au moins une image et/ou de zones comprenant au moins un graphique.

A l'étape E500 le processeur 100 associe aux boîtes engoblantes déterminées à l'étape E406 de la Fig. 4, les marqueurs représentatifs de la présence d'une zone d'image dans le document déterminé à l'étape E305 de la Fig. 3.

Les marqueurs qui sont compris dans une boîte englobante sont associés à ladite boîte englobante.

A l'étape suivante E501, le processeur 100 détermine, pour chaque boîte englobante, le taux de présence de marqueurs dans ladite boîte englobante, sélectionne les boîtes englobantes dont le taux de présence est supérieur à un quatrième seuil prédéterminé, par exemple égal à 5%.

A l'étape suivante E502, le processeur 100 détermine que chaque boîte englobante dont le taux de présence de marqueurs dans la boîte englobante est supérieur au quatrième seuil prédéterminé est une boite englobante contenant au moins une image.

A l'étape suivante E503, le processeur 100 supprime toutes les boîtes englobantes contenant au moins une image qui ont une taille inférieure à une valeur prédéterminée, par exemple 50*50 coefficients.

A l'étape suivante E504, le processeur 100 sélectionne parmi les images de détail binarisées et fusionnées les coefficients qui ne correspondent ni à une zone de texte ni à une boîte englobante contenant au moins une image qui n'a pas été supprimée.

A l'étape suivante E505, le processeur 100 exécute un algorithme de lissage de longueur RLSA sur les coefficients sélectionnés à l'étape E504.

Selon la présente invention, C est égal à 20.

A l'étape suivante E506, le processeur 100 procède à une recherche de composantes connexes avec les coefficients obtenus à l'étape E505 de la même manière que celle décrite à l'étape E404.

A l'étape suivante E507, le processeur 100 détermine pour chaque composante connexe, un rectangle ou boîte englobant la composante connexe.

Les boîtes englobantes déterminées à l'étape E507 sont des boîtes englobantes comprenant des graphiques.

Bien entendu, la présente invention n'est nullement limitée aux modes de réalisation décrits ici, mais englobe, bien au contraire, toute variante à la portée de l'homme du métier et particulièrement la combinaison de différents modes de réalisation de la présente invention.

## Revendications

1. Procédé de segmentation d'un document numérique constitué de pixels **caractérisé en ce que** le procédé comporte les étapes de :

   - décomposition (E201) en ondelettes des pixels pour obtenir des coefficients de trois images de détail,
   - partitionnement (E202) de la décomposition en ondelettes en blocs de coefficients selon une grille,
   - détermination (E203) d'une variance pour chaque bloc de coefficients,
   - identification (E205) des blocs qui comprennent du texte à partir des variances déterminées,
   - pour chaque bloc identifié, identification (E220) des pixels du document correspondant au bloc identifié et détermination (E221) d'un histogramme de valeurs des pixels,
   - pour chaque histogramme, retranchement (E225, E229) aux valeurs de l'histogramme, des valeurs de deux gaussiennes déterminées à partir d'une partie des valeurs de l'histogramme,
   - pour chaque histogramme, détermination (E232) si la zone comportant des pixels correspondant au bloc identifié est une zone de texte en comparant une donnée obtenue à partir de l'histogramme dont les valeurs de deux gaussiennes ont été retranchées à un premier seuil.

2. Procédé selon la revendication 1, **caractérisé en ce que** le procédé comporte en outre les étapes de :

   - division (E207) des blocs non identifiés comme comprenant du texte en sous blocs,
   - détermination (E208) d'une variance pour chaque sous bloc de coefficients,
   - identification des sous blocs qui comprennent du texte à partir des variances déterminées,
   - pour chaque sous bloc identifié, identification des pixels du document correspondant au sous bloc identifié et détermination d'un histogramme de valeurs,
   - pour chaque histogramme, retranchement aux valeurs de l'histogramme, des valeurs de deux gaussiennes déterminées à partir d'une partie des valeurs de l'histogramme,
   - pour chaque histogramme, détermination si la zone comportant des pixels correspondant au sous bloc identifié est une zone de texte en comparant une donnée obtenue à partir de l'histogramme dont les valeurs de deux gaussiennes ont été retranchées à un second seuil.

**3.** Procédé selon la revendication 2, **caractérisé en ce que** le procédé comporte en outre les étapes de :

- sélection d'au moins bloc adjacent à un sous bloc correspondant à une zone de texte, et si le bloc adjacent n'est pas identifié comme étant une zone de texte :

- identification des pixels du document correspondant au bloc adjacent et détermination d'un histogramme de valeurs,
- retranchement aux valeurs de l'histogramme, des valeurs de deux gaussiennes déterminées à partir d'une partie des valeurs de l'histogramme,

- détermination si la zone comportant des pixels correspondant au bloc adjacent est une zone de texte en comparant une donnée obtenue à partir de l'histogramme dont les valeurs de deux gaussiennes ont été retranchées à un troisième seuil.

**4.** Procédé selon la revendication 3, **caractérisé en ce que** un bloc est constitué de soixante quatre par soixante quatre coefficients, un sous bloc est constitué de trente deux par trente deux coefficients et un bloc adjacent est constitué de seize par seize coefficients.

**5.** Procédé selon l'une quelconque des revendications 1 à 3, **caractérisé en ce que** la variance est une somme de variances calculées sur des coefficients de trois images de détails situées à la même position dans la grille.

**6.** Procédé selon l'une quelconque des revendications 1 à 5, **caractérisé en ce que** les blocs qui comprennent du texte sont identifiés en effectuant une classification des variances déterminées en deux partitions.

**7.** Procédé selon l'une quelconque des revendications 3 à 6, **caractérisé en ce que** le procédé comporte en outre les étapes effectuées sur des zones du document non déterminées comme zones de texte de :

- calcul de la valeur médiane de chaque coefficient de chaque image de détail et qui ne correspond pas à un bloc ou sous bloc ou bloc adjacent contenant du texte.
- formation d'autant de vecteurs à trois dimensions qu'il existe de positions de coefficients dans une image de détail ne correspondant pas à un bloc ou sous bloc ou bloc adjacent contenant du texte, les coordonnées de chaque vecteur étant les valeurs des médianes du coefficient calculées dans les trois images de détail,
- classification des vecteurs en quatre classes,

- fusion des trois classes ayant la plus forte énergie,
- ouverture et dilatation pour chaque position correspondant à un vecteur compris dans les trois classes fusionnées,
- détermination de marqueurs représentatifs de la présence d'une zone d'image dans le document comme les pixels résultant de l'ouverture et de la dilatation morphologique.

**8.** Procédé selon la revendication 7, **caractérisé en ce que** le procédé comporte en outre les étapes de :

- affectation d'une valeur binaire à chaque coefficient de chaque image de détail et qui ne correspond pas à un bloc ou sous bloc ou bloc adjacent contenant du texte,
- fusion des trois images de détail dont les coefficients ont une valeur binaire,
- exécution d'un algorithme de lissage de longueur sur les coefficients fusionnés,
- ouverture morphologique asymétrique sur les coefficients sur lesquels l'algorithme de lissage a été effectué,
- recherche de composantes connexes avec les coefficients obtenus suite à l'ouverture morphologique asymétrique,
- détermination pour chaque composante connexe, d'une boîte englobant la composante connexe.

**9.** Procédé selon la revendication 8, **caractérisé en ce que** le procédé comporte en outre les étapes de :

- association aux boîtes englobantes des marqueurs représentatifs de la présence d'une zone d'image dans le document,
- détermination, pour chaque boîte englobante, du taux de présence de marqueurs dans ladite boîte englobante et sélection des boîtes englobantes dont le taux de présence est supérieur à un seuil prédéterminé,
- détermination que chaque boîte englobante dont le taux de présence de marqueurs dans la boîte englobante est supérieur au seuil prédéterminé est une boite englobante contenant au moins une image.

**10.** Procédé selon la revendication 9, **caractérisé en ce que** le procédé comporte en outre l'étape de :

- suppression de toutes les boîtes englobantes contenant au moins une image qui ont une taille inférieure à une valeur prédéterminée.

**11.** Procédé selon la revendication 10, **caractérisé en ce que** le procédé comporte en outre les étapes de :

- sélection parmi les images de détail fusionnées des coefficients qui ne correspondent ni à une zone de texte ni à une boîte englobante contenant au moins une image qui n'a pas été supprimée,
- exécution d'un algorithme de lissage de longueur sur les coefficients sélectionnés,
- recherche de composantes connexes avec les coefficients obtenus par l'algorithme de lissage de longueur,
- détermination pour chaque composante connexe, d'une boîte englobant la composante connexe et comprenant des graphiques.

**12.** Dispositif de segmentation d'un document numérique constitué de pixels **caractérisé en ce que** le dispositif comporte :

- des moyens de décomposition en ondelettes des pixels pour obtenir des coefficients de trois images de détail,
- des moyens de partitionnement de la décomposition en ondelettes en blocs de coefficients selon une grille,
- des moyens de détermination d'une variance pour chaque bloc de coefficients,
- des moyens d'identification des blocs qui comprennent du texte à partir des variances déterminées,
- des moyens, pour chaque bloc identifié, d'identification des pixels du document correspondant au bloc identifié et détermination d'un histogramme de valeurs des pixels,
- des moyens, pour chaque histogramme, de retranchement aux valeurs de l'histogramme, des valeurs de deux gaussiennes déterminées à partir d'une partie des valeurs de l'histogramme,
- des moyens, pour chaque histogramme, de détermination si la zone comportant des pixels correspondant au bloc identifié est une zone de texte en comparant une donnée obtenue à partir de l'histogramme dont les valeurs de deux gaussiennes ont été retranchées à un premier seuil.

Fig. 1

E200 — Redimensionnement document

E201 — Décomposition en ondelettes

E202 — Partitionnement en blocs

E203 — Calcul variances pour chaque bloc

E204 — Classification

E205 — Identification blocs texte

E206 — Mémorisation blocs texte

E207 — Division blocs non texte

E208 — Calcul variances pour chaque sous bloc

E209 — Classification

E210 — Identification sous blocs texte

# Fig. 2a

E220 — Identification pixels

E221 — Construction histogramme

E222 — Recherche premier maximum

E223 — Recherche indice mi hauteur

E224 — Détermination variance

E225 — Retranchement gaussienne de l'histogramme

E226 — Recherche second maximum

E227 — Recherche indice mi hauteur

E228 — Détermination variance

E229 — Retranchement gaussienne de l'histogramme

E230 — Comparaison premier/second seuil

E232 — Blocs/sous blocs texte

E231 — Blocs sous blocs non texte

E233 — Sélection blocs 16*16 adjacents

E234 — Bloc appartient bloc/sous bloc texte ?

E235 — Blocs adjacents texte

Fig. 2b

E240 — Construction histogramme

E241 — Recherche premier maximum

E242 — Recherche indice mi hauteur

E243 — Détermination variance

E244 — Retranchement gaussienne de l'histogramme

E245 — Recherche second maximum

E246 — Recherche indice mi hauteur

E247 — Détermination variance

E248 — Retranchement gaussienne de l'histogramme

E249 — Comparaison troisième seuil

E251 — Blocs adjacents texte

E250 — Blocs adjacents non texte

Fig. 2c

E300 — Calcul valeur médiane pour chaque coefficient

E301 — Formation vecteurs

E302 — Classification non supervisée en quatre classes

E303 — Fusion des 3 classes à forte énergie

E304 — Ouverture dilatation

E305 — Obtention marqueurs

Fig. 3

E400 — Binarisation des images de détail

E401 — Combinaison binaire

E402 — RLSA

E403 — Ouverture asymétrique

E404 — Composantes connexes

E405 — Boîtes englobantes

Fig. 4

E500 — Association boîtes englobantes marqueurs

E501 — Taux présence > quatrième seuil

E502 — Boîte englobant image

E503 — Suppression petite boîte englobant image

E504 — Sélection dans combinaison binaire

E505 — RLSA

E506 — Composantes connexes

E507 — Boîtes englobantes

Fig. 5

Europäisches
Patentamt

European
Patent Office

Office européen
des brevets

# RAPPORT DE RECHERCHE EUROPEENNE

Numéro de la demande

EP 13 18 9823

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | LI J ET AL: "CONTEXT-BASED MULTISCALE CLASSIFICATION OF DOCUMENT IMAGES USING WAVELET COEFFICIENT DISTRIBUTIONS", IEEE TRANSACTIONS ON IMAGE PROCESSING, IEEE SERVICE CENTER, PISCATAWAY, NJ, US, vol. 9, no. 9, septembre 2000 (2000-09), pages 1604-1615, XP000963532, ISSN: 1057-7149, DOI: 10.1109/83.862641 | 1-6,12 | INV. G06K9/00 G06K9/46 |
| Y | * le document en entier * | 7 | |
| A | JIA LI ET AL: "Text and picture segmentation by the distribution analysis of wavelet coefficients", IMAGE PROCESSING, 1998. ICIP 98. PROCEEDINGS. 1998 INTERNATIONAL CONFERENCE ON CHICAGO, IL, USA 4-7 OCT. 1998, LOS ALAMITOS, CA, USA,IEEE COMPUT. SOC, US, vol. 3, 4 octobre 1998 (1998-10-04), pages 790-794, XP010586931, DOI: 10.1109/ICIP.1998.999065 ISBN: 978-0-8186-8821-8 * le document en entier * | 1-12 | |
| A | HONG-MING SUEN ET AL: "Color document image segmentation for automated document entry systems", TENCON '96. PROCEEDINGS., 1996 IEEE TENCON. DIGITAL SIGNAL PROCESSING APPLICATIONS PERTH, WA, AUSTRALIA 26-29 NOV. 1996, NEW YORK, NY, USA,IEEE, US, vol. 1, 26 novembre 1996 (1996-11-26), pages 131-136, XP010236840, DOI: 10.1109/TENCON.1996.608732 ISBN: 978-0-7803-3679-7 * Sections 3 et 4 * | 1-12 | |

DOMAINES TECHNIQUES RECHERCHES (IPC)

G06K

-/--

Le présent rapport a été établi pour toutes les revendications

| Lieu de la recherche | Date d'achèvement de la recherche | Examinateur |
|---|---|---|
| La Haye | 5 novembre 2013 | Alecu, Teodor Iulian |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

# RAPPORT DE RECHERCHE EUROPEENNE

Numéro de la demande

EP 13 18 9823

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | Ana Belen Petro Balaguer: "Analytical methods for the study of color in digital images",<br><br>, février 2006 (2006-02), XP055073007, Palma de Mallorca<br>Extrait de l'Internet: URL:http://ibdigital.uib.es/greenstone/collect/tesisUIB/archives/TDX-1027.dir/TDX-1027106-144116.pdf [extrait le 2013-07-25]<br>* Chapitre 3 *<br>----- | 1 | |
| Y | JUNQING CHEN ET AL: "Image segmentation by spatially adaptive color and texture features",<br>PROCEEDINGS 2003 INTERNATIONAL CONFERENCE ON IMAGE PROCESSING (CAT. NO.03CH37429), BARCELONA, SPAIN, 14-17 SEPT. 2003; [INTERNATIONAL CONFERENCE ON IMAGE PROCESSING], IEEE, IEEE PISCATAWAY, NJ, USA,<br>vol. 1, 14 septembre 2003 (2003-09-14), pages 1005-1008, XP010670087, ISBN: 978-0-7803-7750-9<br>* Section 3;<br>page 1006, colonne de droite *<br>-----<br>-/-- | 7 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| La Haye | 5 novembre 2013 | Alecu, Teodor Iulian |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

| | Europäisches Patentamt<br>European Patent Office<br>Office européen des brevets | **RAPPORT DE RECHERCHE EUROPEENNE** | Numéro de la demande<br>EP 13 18 9823 |
|---|---|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | GLLAVATA J ET AL: "Text detection in images based on unsupervised classification of high-frequency wavelet coefficients", PATTERN RECOGNITION, 2004. ICPR 2004. PROCEEDINGS OF THE 17TH INTERNATIONAL CONFERENCE ON CAMBRIDGE, UK AUG. 23-26, 2004, PISCATAWAY, NJ, USA,IEEE, LOS ALAMITOS, CA, USA, vol. 1, 23 août 2004 (2004-08-23), pages 425-428, XP010724279, DOI: 10.1109/ICPR.2004.1334146 ISBN: 978-0-7695-2128-2 * Section 3 *<br>----- | 1-12 | |
| A | CHUNG-WEI LIANG AND PO-YUEH CHEN: "DWT Based Text Localization", INTERNATIONAL JOURNAL OF APPLIED SCIENCE AND ENGINEERING, vol. 2, no. 1, 2004, pages 105-116, XP055073010, * le document en entier *<br>----- | 8-10 | |
| A | FARHOODI ET AL: "Text segmentation from images with textured and colored background", IRANIAN CONFERENCE ON ELECTRICAL ENGINEERING, 2005, XP055073015, * le document en entier *<br>----- | 8-10 | |
| | -/-- | | |

| | | | DOMAINES TECHNIQUES RECHERCHES (IPC) |
|---|---|---|---|

Le présent rapport a été établi pour toutes les revendications

| Lieu de la recherche | Date d'achèvement de la recherche | Examinateur |
|---|---|---|
| La Haye | 5 novembre 2013 | Alecu, Teodor Iulian |

EPO FORM 1503 03.82 (P04C02)

| | Europäisches Patentamt |
|---|---|
| | European Patent Office |
| | Office européen des brevets |

**RAPPORT DE RECHERCHE EUROPEENNE**

Numéro de la demande

EP 13 18 9823

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | HAMED BEHIN ET AL: "Incorporated preprocessing and physical layout analysis of a binary document image using a two stage classification", COMPUTER AND COMMUNICATION ENGINEERING (ICCCE), 2010 INTERNATIONAL CONFERENCE ON, IEEE, PISCATAWAY, NJ, USA, 11 mai 2010 (2010-05-11), pages 1-5, XP031738817, ISBN: 978-1-4244-6233-9 * le document en entier * ----- | 8-10 | |
| | | | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| La Haye | 5 novembre 2013 | Alecu, Teodor Iulian |

EPO FORM 1503 03.82 (P04C02)